# EUROPEAN PATENT SPECIFICATION

(11) **EP 1 596 584 B1**
(45) Date of publication and mention of the grant of the patent: **29.07.2009**
(21) Application number: 05010143.5
(22) Date of filing: 10.05.2005
(51) Int. Cl.: H04N 5/232

(54) **Autofocus system**
Autofokussystem
Système de focalisation automatique

(30) Priority: 10.05.2004 JP 2004139737
(43) Date of publication of application: 16.11.2005
(73) Proprietor: Fujinon Corporation, Saitama-shi, Saitama (JP)
(72) Inventor: Yajima, Shinya, Saitama-shi, Saitama (JP)
(74) Representative: Grünecker, Kinkeldey, Stockmair & Schwanhäusser Anwaltssozietät

(56) References cited:
- EP-A- 0 399 232
- EP-A- 1 017 232
- US-A1- 2005 117 049

## Description

The present invention relates to an autofocus system of a broadcast television camera for automatically attaining focus on a subject in an AF area which is set as an autofocus target range in an imaging finder.

JP 2002365519 discloses such a television camera. This system provides the user with the possibility to choose an autofocusing point by touching the desired point via a touch panel disposed on the viewfinder. Furthermore, a limited range within which the autofocusing point can be choosen in displayed.

Another autofocus system is described in EP-A-1 017 232. This document describes a camera with a configurable focus area. The camera includes an imaging system for generating a radial video signal of an image within a field of view, wherein the imaging system is adapted to adjust the focal point of the image according to an adjustment signal. The camera includes a single focus area in the viewfinder, which is to be shifted to different locations along the viewfinder and can be adjusted in size and / or shape.

US 5,692,222 discloses a camera having a focus detection device comprising a plurality of individual single focus point detection zones upon which the autofocusing method can be carried out individually or for all zones at the same time.

US 5,815,748 discloses an autofocusing module wherein the entire area of a CCD image pickup device can be used for autofocusing based on contrast detection. Furthermore, an operation section is provided with a touch panel so that, when a user touches a particular portion of the touch panel, a corresponding partial area out of nine different partial areas of the entire area can be selected to carry out the contrast detection for autofocusing.

For video cameras such as a broadcast television camera, the contrast method is used as an autofocus (hereinafter, referred to as AF) method. In AF of the contrast method, a subject image formed through a photographing lens is obtained by an image pickup device and the focus of the photographing lens is controlled to have the maximum contrast of the subject image.

Further, in AF of the contrast method, an imaging finder (photographing range) is not entirely the target range of AF. Generally, for example, a rectangular part (AF area) of the imaging finder is the target range of AF. A conventional technique is known in which the position of an AF area can be changed on an imaging finder and focus is achieved by AF on a desired subject in a photographing range (e.g., Japanese Patent Application Laid Open No. 10-173980).

In the case of a large AF area, the following advantage is obtained: a target subject to be focused can be readily fit into the AF area, and even when the target subject moves for a distance in a screen, focus can be achieved on the target subject without changing a photographing range and the position of the AF area. However, the large AF area may include not only the desired target subject but also another subject which can be a target in some conditions. Thus, focus may not be achieved on the target subject.

In contrast to the large AF area, in a small AF area, only a desired target subject can be readily fit into the AF area even when a number of subjects can be targets in a photographing range. Thus, focus can be positively achieved on the desired target subject. However, when the AF area is small, it is necessary to change the photographing range or the position of the AF area according to the position and movement of the target subject.

As described above, the preferred position and size of the AF area is different according to the circumstances and thus it is desirable to quickly change the position and size of the AF area according to the circumstances. However, a cameraperson simultaneously performs a number of operations including a lens operation during photographing. Thus, it is difficult to perform complicated operations of changing the position and size of the AF area. For this reason, it is desirable to easily change the AF area, though the freedom of choice of the position and size of the AF area is limited to some extent.

The present invention is devised in view of these circumstances. An object of the present invention is to provide an autofocus system which can change the position and size of an AF area with a simple operation and set a preferred AF area according to the circumstances.

In order to attain the object, a first aspect of the present invention is an autofocus system according to claim 1 is provided. The autofocus system automatically obtain, focus on a subject in an AF area set in an imaging finder, wherein the AF area can be changed to one of a predetermined reference area and a plurality of areas divided from the reference area in the imaging finder.

According to the present invention, the AF area serving as a target range of AF is restrictively changed to one of the predetermined reference area and the plurality of areas divided from the reference area, and thus it is possible to change the AF area with a simple operation. The size of the AF area can be changed between the reference area and the divided areas, and the position of the AF area can be changed as well. The positional change is necessary when the AF area is reduced. In this way, a preferred AF area can be set according to the circumstances.

According to the invention of the first aspect, an autofocus system of a second aspect comprises an indicating device which indicates one of the reference area and the plurality of divided areas as an AF area, an AF area setting device which sets, as an AF area, the area indicated by the indicating device, and a focus control device which controls the focus of a photographing lens based on a subject image in the AF area set by the AF area setting device and achieves focus on a subject in the AF area. When focus control for focusing is performed based on a subject image, the AF area is changed and the range of the subject image to be focused is also changed.

According to the autofocus system of the present invention, the position and size of the AF area can be changed with a simple operation and a preferred AF area can be set according to the circumstances.

### BRIEF DESCRIPTION OF THE DRAWINGS

Fig. 1 is a block diagram showing the configuration of a photographing system using an autofocus system of the present invention;
Fig. 2 is a diagram showing an example of the range of an AF area (reference area) in an imaging finder;
Fig. 3 is a diagram showing an example of the range of a left divided area and a right divided area in the imaging finder;
Fig. 4 is a diagram showing an example in which it is more preferable to change the AF area to the divided area rather than the reference area;
Fig. 5 is a diagram showing an example in which it is more preferable to change the AF area to the divided area rather than the reference area;
Fig. 6 is a diagram showing the specific configuration of an AF area change indicating device;
Fig. 7 is a flowchart showing the steps of AF processing in an AF mode of a CPU when the AF area is made changeable; and

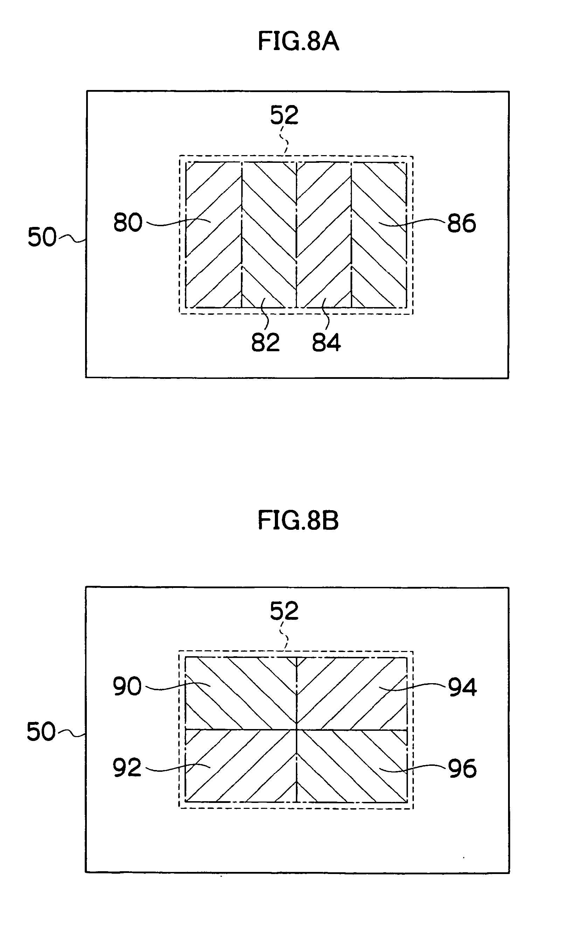

Fig. 8A is a diagram showing another patterns of divided areas which can serve as AF areas.
Fig. 8B is a diagram showing another patterns of divided areas which can serve as AF areas.

### DETAILED DESCRIPTION OF THE PREFERRED EMBODIMENTS

The following will specifically describe a preferred embodiment of an autofocus system of the present invention in accordance with the accompanying drawings.

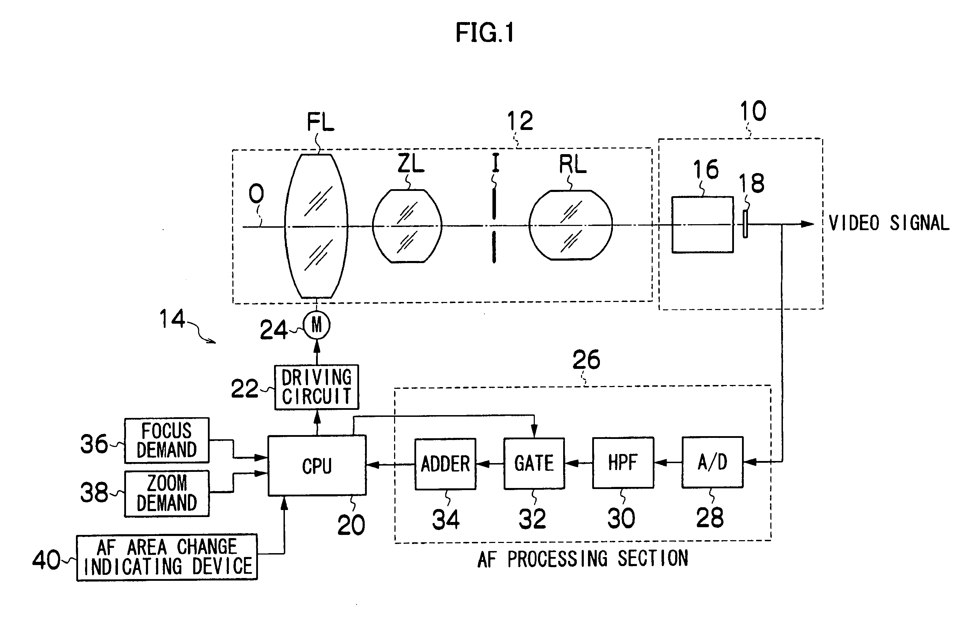

Fig. 1 is a block diagram showing the configuration of a photographing system using the autofocus system of the present invention. The photographing system of Fig. 1 is constituted of a camera body 10 (camera head) of a broadcast television camera, a photographing lens 12 (optical system) mounted on the camera body 10 via a mount, and a control system 14 for controlling the photographing lens 12. The photographing lens 12 and the control system 14 are configured as an integrated lens device except for a part of the configuration. The devices of the system may be configured in any pattern. For example, the photographing lens 12 and the control system 14 may be configured separately.

In the photographing lens 12, focus lens(es) FL, zoom lens(es) ZL, a diaphragm I, relay lens(es) RL, and so on are arranged in this order along an optical axis O. The focus lens FL and the zoom lens ZL are movable in the direction of the optical axis. When the focus lens FL moves, a focus position (subject distance) changes. When the zoom lens ZL moves, a magnification (focal distance) changes. The diaphragm I opens and closes and the brightness of an image changes according to the degree of opening/closing of the diaphragm I.

In the camera body 10, a color separation optical system 16 and image pickup devices (e.g., CCDs) are disposed. The color separation optical system 16 separates subject light, which has been incident from the photographing lens 12, into three color wavelengths of red(R), green(G), and blue(B). The image pickup devices form images of subject light of the separated colors R, G, and B. In Fig. 1, a single image pickup device 18 represents the image pickup devices of R, G, and B. The image pickup devices are positioned with optical path lengths which are equal optically. Subject light incident on the imaging surface of the image pickup device 18 is subjected to photoelectric conversion by the image pickup device 18, and a video signal is generated by a predetermined signal processing circuit in the camera body 10.

The focus lens FL, the zoom lens ZL, and the diaphragm I of the photographing lens 12 are electrically controlled by the control system 14. A motor 24 is connected to the focus lens FL. A CPU 20 transmits a control signal to a driving circuit 22 to drive the motor 24, so that the position and speed of the focus lens FL are controlled. Information on the current position of the focus lens FL is supplied from a position sensor (not shown) to the CPU 20. The current position information is necessary for controlling the position of the focus lens FL. The zoom lens ZL and the diaphragm I are controlled in the same manner as the focus lens FL. Motors (not shown) connected to the lens ZL and the diaphragm I are driven in response to control signals from the CPU 20.

Controllers such as a focus demand 36 and a zoom demand 38 are connected to the control system 14 (lens device) via cables or the like, and command signals are supplied from the controllers to the CPU 20. For example, the focus demand 36 is used to manually operate the focus of the photographing lens 12. The command signal with a value indicating the target position of the focus is supplied to the CPU 20 in response to a manual operation of an operating member provided in the focus demand 36. In a manual focus (MF) mode, the position of the focus lens FL is controlled by the CPU 20 in response to the command signal from the focus demand 36 and the focus lens FL is moved to a position corresponding to the value of the command signal.

The zoom demand 38 is used for a zoom operation (the zoom operation is generally a manual operation) of the photographing lens 12. The command signal with a value indicating the target speed of zooming is supplied to the CPU 20 in response to a manual operation of an operating member provided in the zoom demand 38. The moving speed of the zoom lens ZL is controlled by the CPU 20 according to the command signal and the zoom lens ZL moves at a speed corresponding to the value of a command signal. For example, the diaphragm I is controlled according to an iris command signal which is supplied from the camera body 10 to the CPU 20.

As described above, in focus control, it is possible to select one of the MF mode in which a manual operation is performed by the focus demand 36 and an autofocus (AF) mode in which focusing is obtained automatically. For example, the focus demand 36 has a switch enabling the user to select one of the MF mode and the AF mode. When one of the modes is selected by the switch, the CPU 20 reads switch information and performs processing according to the selected mode.

When the AF mode is selected, the CPU 20 performs AF processing. At this point, the CPU 20 acquires focus evaluation value information from an AF processing section 26 (specifically described later). The focus evaluation value information indicates the contrast of a subject image. The focus lens FL is controlled based on the focus evaluation value information and moved to a position where the subject image has the maximum contrast.

The AF processing section 26 is constituted of an A/D converter 28, a high pass filter (HPF) 30, a gate circuit 32, and an adder circuit 34. A video signal (luminance signal) obtained by the image pickup device 18 of the camera body 10 is inputted to the AF processing section 26, and the video signal is converted into a digital signal by the A/D converter 28. Then, only a video signal having a high frequency component is extracted by the HPF 30. The video signal having a high frequency component is then inputted to the gate circuit 32, in which only a video signal in a range corresponding to a predetermined AF area is extracted. The AF area is set in an imaging finder. The range of the AF area for extracting video signals in the gate circuit 32 is specified by an AF area signal supplied from the CPU 20. Then, the video signals extracted in the AF area by the gate circuit 32 are inputted to the adder circuit 34 and integrated for each field (each screen).

The integrated values obtained thus by the adder circuit 34 are focus evaluation values, each indicating the contrast of a subject image in the AF area. The focus evaluation values are sequentially read by the CPU 20.

The CPU 20 controls the focus lens FL while obtaining the focus evaluation values from the AF processing section 26, and moves the focus lens FL to a focus position where the focus evaluation value is maximized. In the present embodiment, so-called hill-climbing method is used as a method of moving the focus lens FL to the focus position where the focus evaluation value is maximized. For example, the following processing is performed: at the start of AF processing, the CPU 20 first displaces the focus lens FL slightly to a close side and an infinite side (so-called wobbling), obtains the focus evaluation values of displacement points from the AF processing section 26, and compares the focus evaluation values. In this way, a moving direction of the focus lens FL is detected. The focus evaluation value increases along the moving direction. When no direction along which the focus evaluation value increases is detected, it is decided that focus is achieved and the focus lens FL is set at a position where the focus lens FL is disposed before wobbling. When a direction along which the focus evaluation value increases is detected, the CPU 20 sequentially obtains focus evaluation values from the AF processing section 26 while moving the focus lens FL in the direction. When the focus lens FL passes through the position where the focus evaluation value is maximized, the CPU 20 detects the maximum focus evaluation value. When the CPU 20 detects the maximum focus evaluation value, the CPU 20 moves the focus lens FL to the position where the maximum value is detected and stops the focus lens FL thereon. Hence, the photographing lens 12 is focused. Such AF processing is repeatedly performed by the CPU 20 and AF focusing is performed in a consecutive manner.

A changing operation of the AF area will be discussed below. The AF area, which is a target range of AF in the imaging finder, is set by the CPU 20. The AF area signal for extracting video signals of the AF area in the gate circuit 32 of the AF processing section 26 is supplied from the CPU 20 to the gate circuit 32.

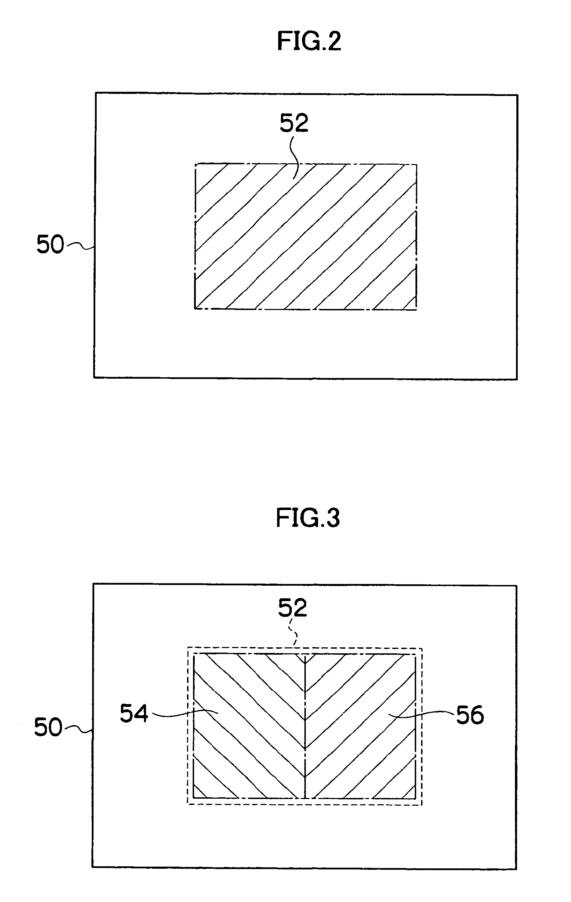

As shown in Fig. 2, a reference AF area (hereinafter, referred to as a reference area) is set as, e.g., a rectangular area 52 (shaded part) at the center of an imaging finder 50.

Change information, which indicates a change of the AF area, is inputted to the CPU 20 from an AF area change indicating device 40 shown in Fig. 1. As shown in Fig. 3, according to the change information, the AF area is changed to one of divided areas (left divided area 54 and right divided area 56), which are horizontally divided from the reference area 52 into two. An AF area frame indicating the range of the currently set AF area is displayed on a view finder for displaying a photographed image in real time. With the display of the AF area frame, a cameraperson can recognize the range of the AF area.

The reference area 52 is relatively large. When the reference area 52 serves as an AF area and only a desired target subject to be automatically focused fits into the AF area except for a background, focus is achieved on the target subject. Even when the target subject moves for a distance, optimally the target subject can be readily fit into the AF area.

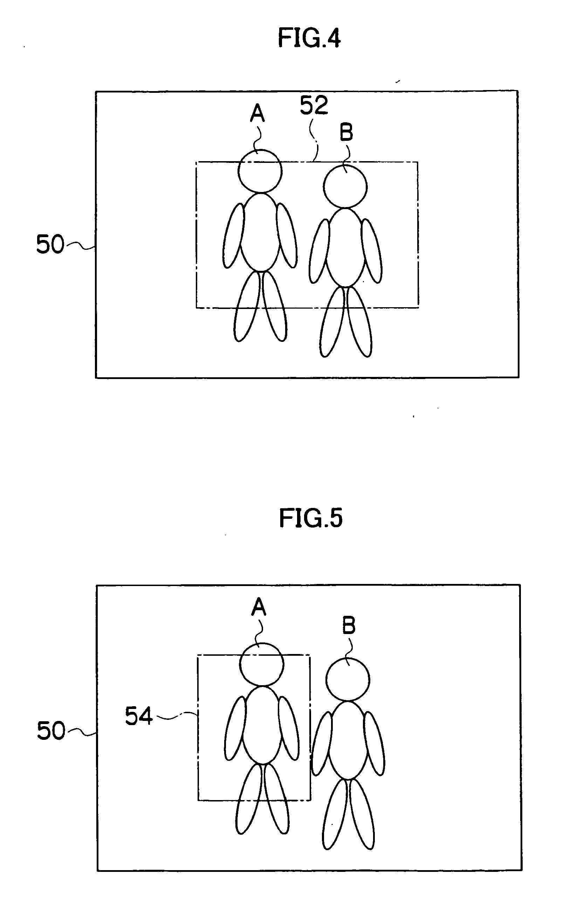

For example, as shown in Fig. 4, when the reference area includes persons A and B at a distance from each other and the person A is a target subject to be focused, focus may be attained on the person B which is not a target subject but is closer than the person A. In this case, optimally the AF area is changed to the left divided area 54 as shown in Fig. 5, thereby positively achieving focus on the person A, which is a target subject.

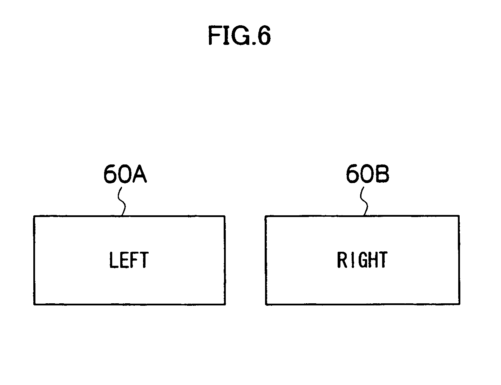

As shown in Fig. 6, the AF area change indicating device 40 of Fig. 1 is constituted of, e.g., two push-button switches 60A and 60B (left switch 60A and right switch 60B) which are reset automatically. At the start of AF processing, the AF area is set at, e.g., the reference area 52. At this point, when the left switch 60A is pressed, the AF area is changed to the left divided area 54. When the right switch 60B is pressed, the AF area is changed to the right divided area 56. When the right switch 60B is pressed while the AF area is set at the left divided area 54, the AF area is changed to the right divided area 56. When the left switch 60A is pressed while the AF area is set at the right divided area 56, the AF area is changed to the left divided area 54.

When the left switch 60A is pressed while the AF area is set at the left divided area 54 or when the right switch 60B is pressed while the AF area is set at the right divided area 56, the AF area is changed to the reference area 52.

In addition to the push-button switches 60A and 60B of Fig. 6, a joystick and a rocking switch may act as the AF area change indicating device 40. Like the push-button switches 60A and 60B, an operating member such as a joystick is operated to the right and left to indicate a change from the reference area 52 to the left divided area 54 or the right divided area 56 and indicate a change from the left divided area 54 or the right divided area 56 to the reference area 52. Further, a single push-button switch may act as a toggle switch as follows: every time the push-button switch is pressed, the AF area is switched to the reference area 52 → the left divided area 54 → the right divided area 56 → the reference area 52.

The changing operation of the AF area is not limited to the above operation. For example, the AF area may be changed as follows: the AF area is set at the left divided area 54 or the right divided area 56 while one of the push-button switches 60A and 60B are pressed, and the AF area is set at the reference area 52 when the push-button switches 60A and 60B are released.

In addition to the push-button switches 60A and 60B, another switch may be provided to indicate a change from the left divided area 54 or the right divided area 56 to the reference area 52.

The AF area change indicating device 40 may be disposed anywhere. It is desirable that the AF area change indicating device 40 be disposed on a position where a cameraperson can readily operate the AF area change indicating device 40 while operating a camera or a lens. For example, when a camera is mounted on a pedestal (pedestal dolly) during photo shooting in a studio or the like, it is preferable that a cameraperson set the AF area change indicating device 40 on the grip of a pan/tilt stick which is mounted on the pedestal to pan and tilt the camera. Further, it is preferable to mount the AF area change indicating device 40 on controllers such as the focus demand 36 and the zoom demand 38.

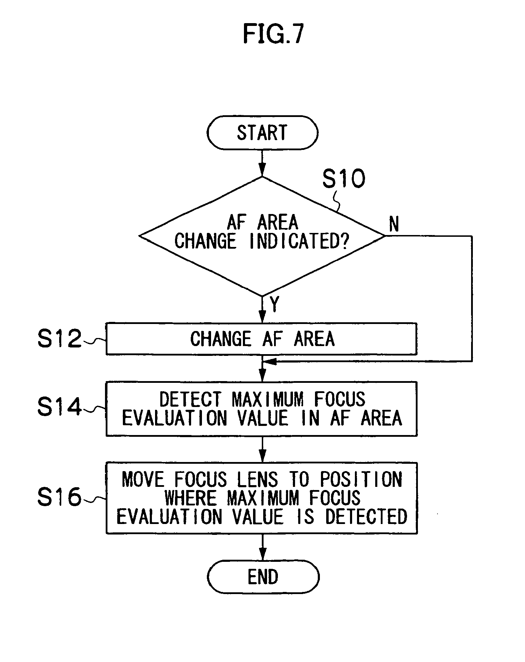

Fig. 7 is a flowchart showing the steps of AF processing in the AF mode of the CPU 20 when the AF area is made changeable. First, the CPU 20 decides whether the AF area change indicating device 40 indicates a change of the AF area (step S10). When the CPU 20 decides NO, the currently set AF area is maintained. At the start of AF processing, the AF area is set at the reference area 52. When the CPU 20 decides YES, the setting of the AF area is changed in response to the indication of the change (step S 12).

Subsequently, when the setting of the AF area is changed, the CPU 20 supplies the AF area signal for specifying the range of the AF area to the gate circuit 32 of the AF processing section 26. When the AF area is not changed, the CPU 20 supplies an AF area signal for specifying the previous range of the AF area to the gate circuit 32. Therefore, the AF processing section 26 determines the focus evaluation values of a subject image in the AF area based on video signals in the range of the AF area. The CPU 20 moves the focus lens FL in a direction along which the focus evaluation value increases while obtaining the focus evaluation values from the AF processing section 26, and the CPU 20 detects the maximum focus evaluation value (step S14). When the CPU 20 detects the maximum focus evaluation value, the CPU 20 moves the focus lens FL to the position where the maximum value is detected (step S16). Hence, focus is achieved on a predetermined subject in the AF area. The above AF processing is repeatedly performed by the CPU 20 along with other processing.

In the present embodiment, the reference area 52 is set at, the center of the imaging finder.

## Claims

1. An autofocussing system of a broadcast television camera for automatically obtaining focussing on a subject in an AF area (52), wherein the AF area comprises a predetermined AF reference area (52) and a plurality of divided AF areas (54, 56, 80, 82, 84, 86, 90, 92, 94, 96,) divided from the reference area (52), and comprising an AF area changing device by which the AF area (52) can be changed to allow choosing for obtaining focus of either the AF reference area (52) or each one of the divided AF areas,
the AF reference area (52) is set at the center of an imaging finder (50), wherein the AF reference area (52) represents a part of the imaging finder (50), and
furthermore comprising as many switches as divided areas to switch between divided areas and the reference area, and
wherein the predetermined AF reference area (52) is vertically divided into two (54, 56) or into four (80, 82, 84, 86) or particularly divided vertically into two and, at the same time, horizontally divided into two to obtain four divided areas (90, 92, 94, 96).

2. The autofocus system according to claim 1, wherein the AF area changing device comprises
an indicating device (40) which indicates one of the reference area (52) and the plurality of divided areas (54), as an AF area; an AF area setting device which sets, as an AF area, the area indicated by the indicating device (40); and a focus control device which controls focus of a photographing lens (12) based on a subject image in the AF area set by the AF area setting device and achieves focus on a subject in the AF area.
In the present embodiment, the AF area can be changed to the two areas (left divided area 54 and right divided area 56) divided on the right and left from the reference area 52. The AF area may be vertically divided into two or divided into three or more. For example, when the AF area can be changed to one of four areas divided from the reference area 52, the reference area 52 in the imaging finder 50 may be horizontally divided into four areas 80, 82, 84, and 86 as shown in Fig. 8A or the reference area 52 may be vertically divided into two and horizontally divided into two to have areas 90, 92, 94, and 96 as shown in Fig. 8B. When the number of divided areas changeable to AF areas increases, a desired divided area may be designated as an AF area by using switches as many as the divided areas. Alternatively, the AF area may be sequentially switched to the divided areas in a toggling manner every time a predetermined switch is pressed.
In this embodiment, the present invention is applied to AF of the contrast method. The present invention may be applied to AF other than AF of the contrast method of this embodiment.

## Patentansprüche

1. Ein Autofokussystem einer Fernsehkamera zum automatischen Einstellen des Fokus auf ein Subjekt in einem AF Bereich (52), wobei der AF Bereich einen vorbestimmten AF Referenzbereich (52) und mehrere aus dem Referenzbereich (52) geteilte AF Teilbereiche (54,56,80,82,84,86,90,92,94,96) aufweist, und das eine AF Bereichsänderungsvorrichtung aufweist womit der AF Bereich (52) geändert werden kann, um eine Auswahl zum Erzielen der Fokussierung entweder im Referenzbereich (52) oder in einem der AF Teilbereiche zu ermöglichen,
wobei der AF Referenzbereich (52) im Zentrum eines Suchers (50) angeordnet ist, und der AF Referenzbereich (52) einen Teil des Suchers (50) darstellt, und
weiterhin genauso viele Schalter wie Teilbereiche aufweist, um zwischen den Teilbereichen und dem Referenzbereich hin- und herschalten zu können, und wobei
der vorbestimmte AF Referenzbereich (52) vertikal zweigeteilt (54, 56) oder viergeteilt (80,82,84,86) ist oder insbesondere vertikal in zwei und gleichzeitig horizontal in zwei geteilt ist um vier Teilbereiche (90, 92, 94, 96) zu erzielen.

2. Das Autofokussystem nach Anspruch 1, wobei die AF Bereichsänderungsvorrichtung umfasst:
eine Anzeigevorrichtung (40), die einen Bereich aus dem Referenzbereich (52) und den Teilbereichen als AF Bereich anzeigt;
eine AF Bereicheinstellungsvorrichtung zum Einstellen des AF Bereichs, der in der Anzeigevorrichtung (40) angezeigt wird, und Eine Fokussteuerungsvorrichtung, die die Fokussierung einer Fotolinse (12) basierend auf einem Bild eines Subjekts in dem AF Bereich, der durch die AF Bereichseinstellungsvorrichtung eingestellt wurde, steuert und die Fokussierung auf ein Subjekt in dem AF Bereich erzielt.

## Revendications

1. Système de focalisation automatique d'une caméra de télédiffusion pour obtenir automatiquement la focalisation sur un sujet dans une zone AF (52), dans lequel la zone AF comprend une zone de référence AF prédéterminée (52) et une pluralité de zones AF séparées (54, 56, 80, 82, 84, 86, 90, 92, 94, 96) séparées de la zone de référence (52), et comportant un dispositif de changement de zone AF grâce auquel la zone AF (52) peut être modifiée pour permettre une sélection afin d'obtenir une focalisation soit de la zone de référence AF (52) soit de chacune des zones AF séparées,
la zone de référence AF (52) est déterminée au centre d'un viseur d'imagerie (50), dans lequel la zone de référence AF (52) représente une partie du viseur d'imagerie (50), et
comportant de plus autant de commutateurs que de zones séparées pour commuter entre les zones séparées et la zone de référence, et
dans lequel la zone de référence AF (52) est verticalement divisée en deux (54, 56) ou en quatre (80, 82, 84, 86) ou en particulier divisée verticalement en deux et, simultanément, divisée horizontalement pour obtenir deux zones séparées (90, 92, 94, 96).

2. Système de focalisation automatique selon la revendication 1, dans lequel le dispositif de changement de zone AF comporte
un dispositif d'indication (40) qui indique l'une de la zone de référence (52) ou de la pluralité de zones séparées (54), en tant que zone AF ; un dispositif de détermination de zone AF qui détermine, en tant que zone AF, la zone indiquée par le dispositif d'indication (40) ; et un dispositif de contrôle de focalisation qui contrôle la focalisation d'un objectif de prise de vues (12) en fonction d'une image sujet dans la zone AF déterminée par le dispositif de détermination de la zone AF et obtient la focalisation sur un sujet dans la zone AF.
